# EUROPEAN PATENT SPECIFICATION

(11) **EP 4 437 032 B1**
(45) Date of publication and mention of the grant of the patent: **29.01.2025**
(21) Application number: 24703204.8
(22) Date of filing: 05.02.2024
(51) Int. Cl.: C08J 3/12, B33Y 10/00, B33Y 70/10, B33Y 80/00, B29C 64/141, C08J 3/20, B29C 64/153

(54) **POWDER, ESPECIALLY FOR LAYER-BY-LAYER PRODUCTION OF THREE-DIMENSIONAL OBJECTS**
PULVER INSBESONDERE FÜR EINE SCHICHTWEISE HERSTELLUNG VON DREIDIMENSIONALEN OBJEKTEN
POUDRE, EN PARTICULIER POUR LA FABRICATION COUCHE PAR COUCHE D'OBJETS TRIDIMENSIONNELS

(30) Priority: 16.02.2023 EP 23157080
(43) Date of publication of application: 02.10.2024
(73) Proprietor: Evonik Operations GmbH, 45128 Essen (DE)
(72) Inventor: GREBE, Maik, 44805 Bochum (DE); EHRING, Sebastian, 47051 Duisburg (DE)
(74) Representative: Evonik Patent Association
(86) International application number: PCT/EP2024/052736
(87) International publication number: WO 2024/170315

(56) References cited:
- EP-B1- 2 493 676
- WO-A1-2014/100320
- WO-A1-2020/061029

## Description

### TECHNICAL FIELD

The present invention relates to a powder, especially for use in methods of layer-by-layer tool-free production of three-dimensional objects. The invention further relates to a process for producing the powder, to a powder bed comprising the powder, to uses of the powder, and to a shaped body produced using the powder.

### TECHNICAL BACKGROUND

The rapid provision of prototypes or small batches is a problem that has frequently been encountered in recent times. Processes that enable this are called rapid prototyping, rapid manufacturing or else additive fabrication methods, or even just 3D printing.

Particularly suitable processes are those that operate on the basis of pulverulent materials and in which the desired structures are produced layer by layer in a tool-free manner by selective melting and solidification. Supporting structures in the case of overhangs and undercuts can be dispensed with since the powder bed surrounding the molten regions provides sufficient support. The subsequent work of removing supports is accordingly avoided. After cooling and solidification of the regions melted layer by layer beforehand, the shaped body can be removed from the powder bed. The methods that work by these principles are embraced herein by the umbrella term of powder bed fusion methods (also referred to hereinafter as PBF methods for short).

In PBF methods, it is possible to achieve selectivity, for example, via the application of susceptors, absorbers or inhibitors, via masks, focused energy input, for example by means of a laser beam, via glass fibres or by means of selective application of the powder. Energy input is typically achieved via electromagnetic radiation. The wavelength of the electromagnetic radiation is typically in the range from 100 nm to 10 cm, preferably between 400 nm and 1600 nm or between 800 nm and 1060 nm. The source of the radiation may, for example, be a microwave generator, a suitable laser, a radiant heater or a lamp, or else combinations thereof.

One example of a PBF method which is of particularly good suitability for the purpose of rapid prototyping is selective laser sintering, which is described in detail, for instance, in US 6,136,948 A and WO 96/06881 A2. In this method, polymer powders are briefly irradiated selectively with a laser beam in a chamber, thus melting the powder particles struck by the laser beam. The molten particles coalesce and rapidly resolidify to form a solid mass. By repeated irradiation of a constant succession of freshly applied layers, this method can be used for rapid and simple production of three-dimensional shaped bodies.

Other suitable PBF methods are, for example, the SIV method as described in WO 01/38061 A1, or a method as described in EP 1 015 214 A1 or US 6,531,086 B1. Both methods operate with a two-dimensional infrared heater for melting the powder. The selectivity of the melting is achieved by application of an inhibitor in the former method and via a mask in the latter method. A further method is described in DE 103 11 438 A1. In this method, the energy required for melting is introduced via a microwave generator, and selectivity is achieved by application of a susceptor.

Further suitable methods include those operating with an absorber which is either present in the powder or applied by inkjet methods as described in DE 10 2004 012 682 A1, DE 10 2004 012 683 A1, DE 10 2004 020 452 A1 and WO 2005/105412 A1.

In the powder bed of PBF methods, it is possible to use pulverulent substrates, especially those composed of polymers. A multitude of polymers and copolymers are suitable for this application, in particular including polyesters, polyvinylchloride, polyacetal, polypropylene, polyethylene, polystyrene, polycarbonate, poly(N-methylmethacrylimides) (PMMI), polymethylmethacrylate (PMMA), ionomers, polyamides, or mixtures thereof. DE 197 47 309 A1, for example, describes a powder suitable for use in PBF methods. The polyamide-12 powder disclosed therein is obtained by reprecipitation of a polyamide prepared beforehand by ring opening and subsequent polycondensation of laurolactam. The polyimide-12 powder thus obtained has a favourable combination of melting temperature, solidification temperature and enthalpy of fusion. However, the free-flow properties of the powder are also of great significance for the process procedure and reliability of a PBF method. In addition, polyaryletherketones (PAEK) are suitable as well. WO 2020/061029 describes a powder composition comprising two fractions of PEAK particles having different parameters and a further fraction comprising a plurality of carbon fibers.

For instance, the free-flow properties of a powder for a PBF method must allow the powder to be transported and applied without difficulty during the method. This is not the case to a sufficient degree for the polymer powder as obtained by the method described in DE 197 47 309 A1. In order to adjust the free-flow properties, a free-flow aid is therefore typically added to powders for PBF methods. For instance, EP 1 443 073 A1 discloses a powder composition which, as well as the polymer powder, comprises a particulate hydrophobized or hydrophobic silica or mixtures thereof. According to the teaching of EP 1 443 073 A1, this enables the establishment of good free flow irrespective of the storage conditions. DE 31 13 392 A1 discloses a method of reducing the electrostatic charge of thermoplastic pulverulent polyamides, which in turn reduces the tendency to form agglomerates. The thermoplastic coating powder produced by this method, as well as thermoplastic pulverulent polyamides, contains an addition of small amounts of a finely divided inorganic powder, said finely divided inorganic powder having been coated with an antistat.

However, a disadvantage of adding an inorganic free-flow aid is that this leads to problems in the processing of powder materials in the PBF method. The inorganic particles act as recrystallization seeds and lead to premature solidification of the melt, which in turn leads to warpage of the melt layer. The result is "curl", which can lead to build process stoppages in PBF methods and results from shrinkage in the course of solidification. Moreover, the components produced commonly show elevated warpage. These effects can be reduced in principle by increasing the energy input and the build temperature during the build process, but these measures in turn lead to different problems, for instance elevated thermal stress on the polymer powder and increased sintering of the powder cake. The effect of the inorganic free-flow aids is also based on their effect as a separating agent, which separates the particles from one another. This is desirable in the case of application of a powder layer, but disadvantageous in the operation of melting the particles, since this hinders the melting and sintering of the particles.

It is therefore an object of the present invention to provide a powder having good free-flow properties for a PBF method, which reduces or avoids the aforementioned disadvantages of the prior art.

### ABSTRACT

It has been found that, surprisingly, the object can be achieved by a powder, especially for use in a powder bed fusion method, comprising a polymer powder, where the polymer powder has a proportion by volume of 0.5% to 15% of polymeric particles having a particle size of less than 10.48 µm, a proportion by volume of not more than 4.0% of polymeric particles having a particle size in the region of not less than 10.48 µm and less than 30.53 µm, and polymeric particles having a particle size of not less than 30.53 µm in a corresponding proportion by volume of the polymer powder, so as to result in a total volume of the polymer powder of 100%, where the proportions by volume and the particle sizes are determined by means of the laser diffraction-based method described herein. The powder may optionally comprise one or more inorganic free-flow aids, the proportion of which is preferably less than 0.1% by weight based on the total weight of the powder.

It is typically assumed in the prior art that powders having significant proportions of fine polymeric particles have comparatively poor free-flow properties. It has now been found that, surprisingly, the claimed adjustment of the proportions by volume of fine polymeric particles can give polymer-based powders that feature good free-flow properties even without addition of an inorganic free-flow aid. This makes it possible to avoid the aforementioned disadvantages associated with the use of inorganic free-flow aids. Thus, the powders of the present invention have a larger process window than those powders comprising an inorganic free-flow aid. Moreover, the powder of the invention, by contrast with powders comprising inorganic free flow aids, permits the production of components having a low tendency to warpage. It is thus possible to avoid the occurrence of the curl effect in PBF methods.

The present invention also relates to a process for producing the powder according to the invention, wherein the polymer powder is provided by at least combining at least one first powder comprising polymeric particles and a second powder comprising polymeric particles.

The invention further relates to a powder bed, especially for use in a fusion zone of a powder bed fusion method, wherein the powder bed comprises the powder disclosed herein, wherein the powder has preferably been produced by a method described herein.

In addition, the present invention is also directed to the use of the powder according to the invention or of the powder bed disclosed herein in a powder bed fusion method.

The present invention also provides shaped articles that are produced using a powder or powder bed described herein, especially by means of a powder bed fusion method.

### DETAILED DESCRIPTION

In the context of this disclosure, the wordings "consisting essentially of" and "formed essentially from" a material mean that the corresponding component is formed very predominantly from the material named, and other materials are present in small amounts at most. The other materials are generally not added deliberately, but if they are present originate for example from impurities or incomplete separation. The other materials are typically present in such small amounts that they do not noticeably affect the properties of the component in question. For example, "consisting essentially of" and "formed essentially from" herein may mean that the respective component, for example the respective particles, are formed from or consist of the material named to an extent of 95% by weight or more, preferably to an extent of 99% by weight or more, further preferably to an extent of 99.5% by weight or more, more preferably to an extent of 99.9% by weight or more.

The singular forms "a" and "the" include herein the plural form unless the context clearly dictates otherwise.

A powder bed fusion method, PBF method for short, is understood in the context of this disclosure to mean methods of layer-by-layer, tool-free production of three-dimensional shaped bodies where regions of the respective powder layer are melted selectively, for instance by input of electromagnetic energy, and the resultant shaped bodies are obtained by solidification of the molten regions and subsequent removal from the powder bed. A particularly preferred example of a PBF method is selective laser sintering, for instance.

The term "polymer" used herein shall be understood to include both homopolymers, i.e. polymers that derive from one type of monomer, and copolymers, i.e. those polymers that derive from two or more different types of monomer. Examples of homopolymers are polyamides such as nylon-11 and nylon-12, for instance. Examples of copolymers may, for instance, be copolyamides such as nylon-6,12, nylon-10,12 and nylon-6,13.

The term "powder" in the context of this invention should be regarded as a term for a solid in the form of a multitude of fine particles. These particles can typically move freely with respect to one another when the powder is agitated. For instance, the powder used in the context of the present invention may especially be capable of flowing freely. The powder may be distinguished from other particulate substances, for instance, by the dimensions of the particles. Accordingly, a powder typically consists essentially of particles having dimensions in the sub-millimetre range, such as below 500 µm or in particular below 250 µm.

As already mentioned above, the present invention relates to a powder, especially for use in a powder bed fusion method, comprising a polymer powder, where the polymer powder has a proportion by volume of 0.5% to 15% of polymeric particles having a particle size of less than 10.48 µm and a proportion by volume of not more than 4.0% of polymeric particles having a particle size in the region of not less than 10.48 µm and less than 30.53 µm. The proportions by volume are based here on the total volume of the polymer powder. The proportions by volume and particle sizes are based on the particle size distribution determined by means of the laser diffraction-based method described further down. The powder may optionally comprise one or more inorganic free-flow aids, the proportion of which is preferably less than 1% by weight, further preferably less than 0.1% by weight, more preferably less than 0.05% by weight, and even more preferably less than 0.01% by weight, based on the total weight of the powder. However, the powder is preferably essentially free of inorganic free-flow aid; this means that inorganic free-flow aid, if present at all, is only present as an impurity in a small amount. Most preferably, the powder is free of inorganic free-flow aid.

A polymer powder is understood to mean a powder comprising particles formed from a material comprising one or more polymers. Such particles are also referred to herein as polymeric particles. Suitable polymers are thermoplastic polymers in particular. The thermoplastic polymers are preferably selected from the group comprising polyolefins, polyethylene, polypropylene, polyvinylchloride, polystyrene, polycarbonates, polyoxymethylene, polyimides, polysulfones, poly(N-methylmethacrylimides), polycarbonate (PC)-acrylonitrile-butadiene-styrene (ABS), ionomers, poly(meth)acrylates such as polymethylmethacrylate, polyvinylidenefluorides, polyetherketones, polyaryletherketones, polyamides and copolymers, mixtures and combinations thereof, where the thermoplastic polymers more preferably comprise homopolyamides, copolyamides or a mixture of homo- and copolyamides. Particularly suitable (co)polyamides here are nylon-12, nylon-11, nylon-6,10, nylon-6.12, nylon-10,12, nylon-6, nylon-6,6, nylon-6,13 or mixtures thereof, particular preference being given to nylon-12 and nylon-6,13. A particularly suitable nylon-12 is described, for example, in published specification DE 197 47 309 A1. Polypropylene is likewise preferred. Polymeric particles may, as well as the one or more polymers, optionally also comprise one or more materials that are not polymers. Such optional materials may be selected, for example, from non-polymeric organic materials and materials for additives and fillers as described further down herein in the context of optional independent components that may be present in the powder according to the invention in addition to the polymer powder. For example, the particles having a particle size of less than 10.48 µm, the particles having a particle size in the range from not less than 10.48 µm to less than 30.53 µm and/or the particles no smaller than 30.53 µm of the polymer powder may each be polymeric particles that may optionally comprise one or more further materials that are not polymers. However, the polymer content in the materials of the particles of the polymer powder is typically predominant. Typically, the particles of the polymer powder are formed from one or more polymers to an extent of 70% by weight or more, to an extent of 80% by weight or more, to an extent of 85% by weight or more, especially to an extent of 90% by weight or more, preferably to an extent of 95% by weight or more, further preferably to an extent of 99% by weight or more. The remaining proportions by weight of the particles of the polymer powder may be accounted for by the one or more optional materials that are not a polymer. The polymer powder preferably includes essentially only particles formed essentially from one or more polymers. The polymer powder more preferably includes only particles formed from one or more polymers. However, the powder according to the invention even then may optionally comprise, as well as the polymer powder described, further constituents composed of polymeric and/or non-polymeric materials, for instance inorganic free-flow aids, fillers or further additives, as described further down.

The polymer powder of the powder according to the invention, as already mentioned, has a proportion by volume of 0.5% to 15% of particles having a particle size of less than 10.48 µm. The polymer powder may have, for example, a proportion by volume of particles having a particle size of less than 10.48 µm of at least 0.6%, especially at least 0.8%, preferably at least 1.0%, further preferably at least 1.5%, more preferably at least 2.0%. The polymer powder may also have, for example, a proportion by volume of particles having a particle size of less than 10.48 µm of not more than 12%, preferably not more than 10%, further preferably not more than 8.0%, more preferably not more than 6.0%. The proportion by volume of the particles having a particle size of less than 10.48 µm may be within a range formed by any combination of the aforementioned values. For example, the polymer powder may have a proportion by volume of 0.8% to 12%, preferably of 1.0% to 10%, further preferably of 1.5% to 8.0%, more preferably of 2.0% to 6.0%, of particles having a particle size of less than 10.48 µm. The content of particles having a particle size of less than 10.48 µm is limited at the top end by the decrease in the minimum ignition energy, which increases the risk of dust explosions and hence the level of safety measures necessary in the handling of the powder.

Furthermore, as already mentioned, the polymer powder of the powder according to the invention is characterized by a proportion by volume of not more than 4.0% of particles having a particle size in the range from not less than 10.48 µm to less than 30.53 µm. For example, the polymer powder may have a proportion by volume of not more than 3.5%, especially not more than 3.0%, preferably not more than 2.5%, further preferably not more than 2.0%, more preferably not more than 1.6%, of particles having a particle size in the region of not less than 10.48 µm and less than 30.53 µm. The polymer powder may, for example, have a proportion by volume of particles having a particle size in the range from not less than 10.48 µm to less than 30.53 µm of 0% or more, 0.1% or more, or 0.2%. The proportion by volume of the particles having a particle size in the range from not less than 10.48 µm to less than 30.53 µm may be within a range formed by any combination of the aforementioned values. For example, the polymer powder may have a proportion by volume of 0% to 3.0%, 0.1% to 2.0%, or 0.2% to 1.6%, of particles having a particle size in the range from not less than 10.48 µm to less than 30.53 µm.

The polymer powder may preferably have, for example, a proportion by volume of particles having a particle size of less than 10.48 µm of 1.0% to 10% and, at the same time, a proportion by volume of particles having a particle size in the range from not less than 10.48 µm to less than 30.53 µm of not more than 3.0%. For example, the polymer powder may have a proportion by volume of particles having a particle size of less than 10.48 µm of 1.5% to 8.0% and, at the same time, a proportion by volume of particles having a particle size in the range from not less than 10.48 µm to less than 30.53 µm of not more than 2.0%. More preferably, the polymer powder has a proportion by volume of particles having a particle size of less than 10.48 µm of 2.0% to 6.0% and, at the same time, a proportion by volume of particles having a particle size in the range from not less than 10.48 µm to less than 30.53 µm of not more than 1.6%.

The polymer powder described herein further comprises particles having a particle size of not less than 30.53 µm in a corresponding proportion by volume of the polymer powder, so as to result in a total volume of the polymer powder of 100% together with the proportion by volume of the particles having a particle size of less than 10.48 µm and the proportion by volume of the particles having a particle size in the range from not less than 10.48 µm to less than 30.53 µm.

The powder according to the invention may be characterized by the process for producing the particles of the polymer powder. The particles of the polymer powder having a particle size of less than 10.48 µm, the particles of the polymer powder having a particle size in the range from not less than 10.48 µm to less than 30.53 µm and the particles of the polymer powder having a particle size of not less than 30.53 µm may be produced by the same or different methods. Suitable processes for producing the particles having a particle size of less than 10.48 µm, the particles having a particle size in the range from not less than 10.48 µm to less than 30.53 µm and/or the particles having a particle size of not less than 30.53 µm include, for example, grinding, precipitation, polymerization, cutting of fibres or compounding of a polymer melt in a material which is not homogeneously miscible, preference being given to grinding and precipitation. The grinding can preferably be performed as a cryogenic grinding or cold grinding operation. Suitable polymerization methods are all standard methods of polymerization for production of polymers, such as cationic, anionic and free-radical polymerization, particular preference being given to anionic polymerization. Suitable precipitation methods are presented, for example, in DE 197 47 309 A1 and EP 1 840 155 A1.

The particles of the polymer powder having a particle size of less than 10.48 µm, the particles of the polymer powder having a particle size in the range from not less than 10.48 µm to less than 30.53 µm and the particles of the polymer powder having a particle size of not less than 30.53 µm may be formed from different materials or the same material. Preferably, the particles of the polymer powder having a particle size of less than 10.48 µm, the particles of the polymer powder having a particle size in the region of not less than 10.48 µm and less than 30.53 µm and the particles of the polymer powder having a particle size of not less than 30.53 µm are formed from the same material, where the material is preferably selected from the abovementioned thermoplastic polymers, especially nylon-12, nylon-6,13 and/or polypropylene.

The polymer powder of the powder according to the invention can also be described by the D50, D10 and/or D90 particle size. The D50 particle size, which is also referred to as median, indicates that particle size of the volume-based particle size distribution below and above which there are 50% of all particles. The D10 particle size correspondingly indicates that particle size of the volume-based particle size distribution below which there are 10% of all particles. The D90 particle size correspondingly indicates that particle size of the volume-based particle size distribution below which there are 90% of all particles. The D50, D10 and D90 particle sizes each refer to the particle size distribution determined by means of the laser diffraction-based method described further down in the examples. The polymer powder of the present invention may, for example, have a D50 particle size of 40 µm to 80 µm, preferably of 50 µm to 70 µm. The D10 particle size may, for example, be from 30 µm to 50 µm and/or the D90 particle size from 75 µm to 120 µm. The polymer powder of the powder according to the invention may also have any combination of the aforementioned stated ranges for the D50, D10 and D90 particle size.

The powder according to the invention may be characterized by the proportion by weight of the polymer powder. Thus, the proportion of the polymer powder based on the total weight of the powder may be at least 20% by weight, at least 30% by weight, at least 40% by weight, at least 50% by weight, at least 60% by weight, at least 70% by weight, at least 80% by weight, preferably at least 90% by weight, further preferably at least 95% by weight, even further preferably at least 99% by weight, or at least 99.5% by weight. The powder according to the invention may also be characterized by the proportion by volume of the polymer powder in the powder. Thus, the proportion of the polymer powder based on the total volume of the powder may be at least 70% by volume, at least 80% by volume, preferably at least 90% by volume, further preferably at least 95% by volume or even further preferably at least 99% by volume. In a preferred practice of the present invention, the powder according to the invention consists essentially of the polymer powder. In a likewise preferred practice of the present invention, the powder according to the invention consists of the polymer powder.

The powder according to the invention may optionally comprise one or more inorganic free-flow aids. Free-flow aids typically have nanoscale dimensions, for example of 500 nm or less, or 100 nm or less, or 50 nm or less, and are conventionally used to improve the free-flow properties of particulate compositions. They typically act as separating agents, which reduces the tendency to form lumps in the powder. The inorganic free-flow aid optionally used may be selected from the group of the standard free-flow aids known per se from the prior art. Typical examples may include, for example, metal oxides, for instance silicon dioxide, aluminium oxide, and mixtures and combinations of these. Silicon dioxide may take the form here of silica, fumed silica, precipitated silica, colloidal silica, hydrophobized silica, hydrophobic silica or mixtures thereof. The hydrophobic or hydrophobized silica is preferably obtained by reacting silica with hydrophobizing agents. The hydrophobization preferably follows after precipitation or pyrolysis of the silica and substantial reaction of free hydroxyl groups of the silica with, for example, silanes, silazanes or siloxanes. Preferred hydrophobizing agents are hexadecylsilane, dimethyldichlorosilane, hexamethyldisilazane, octamethylcyclotetrasiloxane, polydimethylsiloxane and methacryloylsilanes. Further possible inorganic free-flow aids are, for instance, glass, metal and ceramic particles, for example glass beads, steel balls or metal grit, which can also be added, for instance, in order to achieve a particular desired mechanical, electrical or magnetic property. The particles of this paragraph do not fall under the definition of "particles" which is used in this invention for polymeric particles, especially when described in combination with particle sizes.

However, the above-described control of the proportions by volume of the finely divided particles having a particle size of less than 30.53 µm in the polymer powder typically makes it possible to dispense with or distinctly reduce the addition of inorganic free-flow aids to the powder according to the invention. The proportion of inorganic free-flow aid, based on the total weight of the powder, is typically less than 1% by weight, further preferably less than 0.1% by weight, more preferably less than 0.05% by weight, and even more preferably less than 0.01 % by weight. Most preferably, the powder according to the invention is essentially free of inorganic free-flow aid; this means that one or more inorganic free-flow aids, if they are present at all, are present merely as impurities in the powder. Even further preferably, the powder according to the invention is free of inorganic free-flow aid.

The powder may optionally further comprise one or more fillers. A filler is understood herein to mean insoluble additives which, when added in an appropriate amount, affect the mechanical, electrical or processing properties of the powder or of shaped bodies produced therefrom, for instance. Fillers typically have dimensions in the micrometre to millimetre range, for example in the range from 35 µm to 2 mm, 50 µm to 1 mm or 75 µm to 500 µm, and therefore differ from free flow aids. It is possible to use any of the fillers used customarily. Standard fillers are, for instance, fillers composed of organic or inorganic materials, for instance organic fillers, amorphous, semicrystalline or crystalline fillers, metal powders, carbonates, sulfates, and natural or synthetic silicates, oxides and hydroxides. Examples include, for instance, metal oxides such as magnesium oxide, zinc oxide and calcium oxide, metal hydroxides such as magnesium hydroxide and aluminium hydroxide, aluminium powder, barium sulfate, mineral fibres, fumed silica, ground quartz, silica, glass fibres, or glass beads. The powder according to the invention may be characterized by the proportion by weight of the filler in the powder. For instance, the proportion of filler based on the total weight of the powder may be up to 70% by weight, up to 60% by weight, up to 50% by weight, up to 40% by weight or up to 30% by weight. The proportion of filler based on the total weight of the powder may, for example, be 5% by weight or more, 10% by weight or more, or 20% by weight or more. The proportion of filler may be within a range formed by any combination of the aforementioned values. The proportion of filler based on the total weight of the powder may, for example, be 0% by weight to 70% by weight, 10% by weight to 60% by weight, or 20% by weight to 50% by weight. In a preferred practice of the present invention, the powder according to the invention contains essentially no filler; in other words, if fillers are present at all, they are present only as impurities in the powder. The powder according to the invention preferably contains no filler.

The powder may also optionally comprise organic non-polymeric materials. Possible organic non-polymeric materials may, for instance, be lactams.

The powder may optionally further comprise one or more additives. An additive is understood herein to mean materials that are added for further modification of the powder according to the invention, for example the colouring or the optimization of the processing properties and/or properties of shaped bodies produced with the powder. Additives used may be the additives used customarily in the prior art, for example organic and inorganic pigments, dyes, substances based on subcooled melts, pH regulators, flame retardants, susceptors, absorbers, stabilizers, processing auxiliaries or mixtures and combinations thereof. Illustrative pigments are, for instance, titanium dioxide, ferrites, zirconium dioxide, and carbon blacks. Suitable stabilizers are, for instance, phenols, especially sterically hindered phenols. Absorbers are used, for example, in order to melt the powder by means of irradiation with electromagnetic energy. Standard absorbers are described, for instance, in DE 10 2004 012 683 A1 and may especially be selected from carbon black, copper hydroxide phosphate, chalk, bone charcoal, carbon fibres, graphite and interference pigments. It is possible for an additive or a mixture of two or more additives to be present in the powder according to the invention. The respective additive is used in each case in an amount suitable for the desired end use. Standard use amounts are known to the person skilled in the art. The amount of additive based on the total weight of the powder may, for example, be up to 10% by weight, up to 6% by weight, up to 3% by weight, up to 2% by weight, up to 1 % by weight, up to 0.5% by weight, up to 0.25% by weight, up to 0.2% by weight, up to 0.1% by weight, or up to 0.05% by weight. In a preferred practice of the present invention, the powder according to the invention contains essentially no additive; in other words, if additives are present at all, they are present only as impurities in the powder. In a further preferred practice of the present invention, the powder according to the invention does not contain any additive.

One way of describing the free-flow properties of the powder according to the invention is by the measurement of flowability. This is possible, for example, with the "Revolution Powder Analyzer" from Mercury Scientific Inc. by the method described in the examples. The parameters obtained here are "Avalanche Angle" and "Absolute Break Energy", which are a measure of the flowability of the powder. Higher values for the avalanche angle and the absolute break energy indicate poorer flowability. The powder according to the invention may especially have an avalanche angle of less than 50°, preferably less than 45° and more preferably less than 40°. The powder preferably has an avalanche angle of 20° to 50°, more preferably of 30° to 40°. The powder according to the invention may also be characterized by the absolute break energy. The powder may have an absolute break energy, for example, of less than 300 kJ/kg, preferably less than 290 kJ/kg, more preferably less than 280 kJ/kg. For example, the powder may have an absolute break energy of 230 kJ/kg to 300 kJ/kg, preferably 240 kJ/kg to 290 kJ/kg, especially 250 kJ/kg to 280 kJ/kg, more preferably 260 kJ/kg to 275 kJ/kg.

The powder according to the invention may also be characterized by the width of the process window in kelvin in a PBF method. The figures given here with regard to the process window relate to the selective laser sintering method as described in the examples. The process window of a powder is defined as the difference between the lower process temperature which is the minimum necessary and the upper process temperature which is the maximum possible. The minimum process temperature necessary is the temperature at which there is no longer any curl effect that can stop the build process. The maximum possible process temperature is the temperature at which the powder particles in the powder start to sinter. For example, the powder according to the invention may have a process window in the selective laser sintering method of at least 2 K, preferably at least 3 K, further preferably at least 4 K, more preferably at least 5 K. For example, the powder according to the invention may have a process window in the PBF method of 2 K to 15 K, preferably 3 K to 12 K, more preferably 4 K to 10 K.

The present invention also relates to a process for producing the above-described powder, wherein the polymer powder is provided by at least combining at least one first powder comprising polymeric particles and a second powder comprising polymeric particles. The first powder and the second powder may independently comprise or consist of one or more materials as described hereinabove for the polymer powder. For instance, the polymeric particles of the first powder and/or the polymeric particles of the second powder may independently contain at least one thermoplastic polymer, where the at least one thermoplastic polymer has preferably been selected from the abovementioned thermoplastic polymers. In a particularly preferred practice of the present invention, the particles of the first powder and the particles of the second powder consist essentially of the same material. The particles of the first powder and/or of the second powder may be produced by the above-described methods for the production of the polymer powder, preference being given to cryogenic grinding, cold grinding and precipitation according to EP 1 840 155 A1 or DE 197 47 309 A1.

The first powder and the second powder are such and/or are combined in such a ratio that the resulting polymer powder has a proportion by volume of 0.5% to 15% of polymeric particles having a particle size of less than 10.48 µm, a proportion by volume of not more than 4.0% of polymeric particles having a particle size in the region of not less than 10.48 µm and less than 30.53 µm, and polymeric particles having a particle size of not less than 30.53 µm in a corresponding proportion by volume of the polymer powder, so as to result in a total volume of the polymer powder of 100%.

In a specific variant of the process according to the invention, the first powder includes essentially only particles having a particle size of not less than 30.53 µm. The second powder may include essentially only particles having a particle size of less than 10.48 µm. The proportion of particles having a particle size in the range from not less than 10.48 µm to less than 30.53 µm in the first powder and in the second powder is collectively sufficiently low that the resultant polymer powder, after the combining of the first powder and the second powder, has a proportion by volume of not more than 4.0% of those particles. The mixing ratio of the first powder and the second powder is chosen such that the polymer powder obtained has a proportion by volume of 0.5% to 15% of particles having a particle size of less than 10.48 µm. In this connection, "essentially having a particular particle size" means that the first powder or second powder very predominantly includes particles of the particle size named, and particles of different particle size are present at most in small amounts, for instance a proportion by volume of less than 5%, less than 2%, less than 1% or less than 0.5%. The particles of different particle size are generally not added deliberately, but if they are present originate for example from incomplete separation or impurities. The particles having different particle size are typically present in such small amounts that they do not noticeably affect the properties of the component in question. In particular, this is understood to mean that the first powder having essentially only particles having a particle size of not less than 30.53 µm has a proportion by volume of particles having a particle size of less than 30.53 µm of less than 5%, preferably less than 2%, especially less than 1%, more preferably less than 0.5%. The second powder having essentially only particles having a particle size of less than 10.48 µm may especially have a proportion by volume of particles having a particle size of not less than 10.48 µm of less than 5%, preferably less than 2%, especially less than 1%, more preferably less than 0.5%.

The first powder and/or the second powder may each be obtained by one or more sifting steps. For instance, the first powder may comprise the coarse material (i.e. the coarse fraction) which is obtained by sifting a first primary powder at 30.53 µm. The first primary powder here preferably has a D50 particle size of 40 µm to 120 µm, more preferably 40 µm to 90 µm. The second powder may comprise the fine material (i.e. the fine fraction) which is obtained by sifting a second primary powder at 10.48 µm. The second primary powder here preferably has a D50 particle size of 1 µm to 20 µm. The first primary powder and the second primary powder may consist of particles of the same or different materials. Combining the first powder and the second powder affords the polymer powder of the powder according to the invention that contains the corresponding proportions by volume of particles having a particle size of less than 10.48 µm, particles having a particle size in the range from not less than 10.48 µm to less than 30.53 µm, and polymeric particles having a particle size of not less than 30.53 µm in a corresponding proportion by volume of the polymer powder, so as to result in a total volume of the polymer powder of 100%.

Alternatively, the first powder and the second powder may be obtained by (1) a first sifting of a primary powder at 30.53 µm, where the course material obtained from the first sifting forms the first powder; and (2) a second sifting of the fine material from the first sifting at 10.48 µm, where the fine material obtained from the second sifting forms the second powder. The primary powder preferably has a D50 particle size of 40 µm to 120 µm, further preferably of 40 µm to 90 µm. Combining the first powder and the second powder thus likewise affords the polymer powder of the powder according to the invention that has the above-described proportions by volume according to the invention of particles having a particle size of less than 10.48 µm, particles having a particle size in the range from not less than 10.48 µm to less than 30.53 µm, and polymeric particles having a particle size of not less than 30.53 µm in a corresponding proportion by volume of the polymer powder, so as to result in a total volume of the polymer powder of 100%. In this process variant, the particles of the powder according to the invention thus obtained are formed essentially homogeneously from the same material.

The particles of the primary powders may be produced by the above-described methods for the production of the particles of the polymer powder, preference being given to cryogenic grinding, cold grinding and precipitation according to EP 1 840 155 A1 or DE 197 47 309 A1. The materials from which the particles of the primary powders are formed may especially comprise or consist of the materials described above for the first and second powders and for the polymer powder.

Sifting may be conducted by the techniques typically employed for the purpose. In a particularly preferred practice of the present invention, sifting is conducted by hydrosifting, aerosifting, centrifugal sifting, zigzag sifting, or toner sifting, very particular preference being given to toner sifting. A particularly suitable device for powder sifting is, for example, the TSP 100 from Hosokawa Alpine AG, Augsburg, Germany, sifting can be conducted, for instance, by the method described below in the examples. For the sifting of a powder, it is also possible to employ two or more sifting techniques sequentially or one sifting technique repeatedly. For example, the sifting of the primary powders may be conducted by the same sifting technique or the same combination of sifting techniques or different sifting techniques or different combinations of sifting techniques. Besides sifting it is conceivable to use sieving methods as alternative classifying method. However, sieving is less preferred as it is more elaborate. In addition, some appropriate sieves of requested sieve size are technically not available.

The process according to the invention, in a preferred practice of the present invention, comprises mixing of the first powder and the second powder. The mixing can be executed with the methods and equipment used customarily. In a particularly preferred practice of the present invention, the mixing is conducted with a high-speed vertical mixer. Another suitable mixing device is the M20 S-FU model from MTI, Detmold, Germany. The mixing conditions are advantageously adjusted here such that a homogeneous mixture is achieved. In the mixing device mentioned, a homogeneous mixture can be produced, for example, by mixing at 1500 rpm for three minutes.

The process according to the invention may also include a step of initially charging or adding to the polymer powder at least one inorganic free-flow aid , wherein the at least one inorganic free-flow aid is preferably mixed homogeneously with the polymer powder. For this purpose, it is possible to use customary mixing techniques, for instance those described above.

The process according to the invention may also comprise a step of initially charging or adding to the polymer powder at least one filler and/or at least one additive, as described above. The at least one filler and/or the at least one additive is preferably mixed homogeneously with the polymer powder. For this purpose, it is possible to use customary mixing techniques, for instance those described above.

It is particularly viable in economic terms to utilize the powder according to the invention through use in a PBF method and in a shaped body produced in such a way. The present invention accordingly also relates to a powder bed, especially for use in a fusion zone of a powder bed fusion method, wherein the powder bed comprises the above-described powder according to the invention, wherein the powder has preferably been produced by the above-described process. In a preferred practice of the present invention, the powder bed consists of the powder according to the invention, or the powder bed is formed essentially from the polymer powder according to the invention; this means that there are essentially no further constituents aside from the powder according to the invention in the powder bed. Further constituents in the powder bed result from impurities in the latter case, if there are any at all.

The present invention thus also provides for the use of a powder or powder bed according to the invention in a powder bed fusion method.

The invention also relates to a shaped body produced by a powder bed fusion method using the powder or powder bed according to the invention. Fields of use for shaped bodies according to the invention are apparent both in rapid prototyping and in rapid manufacturing. The latter means small runs in particular, i.e. the production of more more than one identical part, but where production using an injection mould or the like is uneconomic, particularly when the parts have a very complex shape. Examples include parts for high-end cars and trucks or racing or rally vehicles that are produced only in small numbers or replacement parts for motorsport where not only the numbers of parts but also the time of availability are important. Industries in which the shaped articles according to the invention are used may include aerospace, medical technology, mechanical engineering, automaking, the sports industry, domestic goods, the electricals industry and the lifestyle sector.

The examples that follow will describe the process for producing the powder according to the invention and the use thereof, without limiting the invention to the examples.

### EXAMPLES

All amounts stated in the examples are based on parts by weight, unless stated otherwise.

### Particle size determination:

Particle size and particle size distribution are measured by laser diffraction using a Malvern Mastersizer 3000, Malvern Panalytical GmbH, Kassel, Germany, with model number MAL1176618 and software version 3.63.1709.120. The instrument comprises a wet module of the MAL1 169873 type. The optical arrangement of the device comprises a red He-Ne light source with a wavelength of 632.8 nm and a blue LED light source with a wavelength of 470 nm. The optical setup comprises an inverse Fourier arrangement of lenses (convergent beam path). The effective focal length is 300 mm. The detector comprises logarithmically spaced channels with an angle range of 0.015 to 144 degrees.

The qualification of the instrument and the experiments are conducted in accordance with ISO 13320:2020, conducting the measurements as an off-line measurement and as a wet measurement. The measurement medium used is degassed deionized water initially charged in the Hydro LV dispersion unit of the Mastersizer 3000 (about 600 ml). The measurement medium is at room temperature. An automated measurement of the background is conducted on the initially charged measurement medium immediately prior to addition of the pre-dispersion described hereinafter. The measurement time is 10 s each for the red and blue light sources.

In order to measure a powder sample in an aqueous medium, it is necessary to disperse the sample with sufficient stability. For this purpose, on the day of measurement, a pre-dispersion of the powder is first made up freshly. For this purpose, 2-3 micro-spatulas of a powder sample are introduced into a 50 ml beaker. It has to be ensured here that the powder to be analysed is homogeneous on sampling. This can be achieved, for example, by upturning the sample several times in the container supplied. Subsequently, 20 ml of a surfactant solution consisting of degassed deionized water, 1.8% by weight of polyoxyethylene-80-sorbitan monooleate and 0.15% by weight of ethoxylated acetylene surfactant (SURFYNOL^{®} 485 W, Evonik, Essen, Germany) are added. The surfactant solution is likewise at room temperature. This mixture is then dispersed vigorously at 250 rpm on a laboratory shaker (model KS500, IKA-Labortechnik, Staufen im Breisgau, Germany) for at least 15 min, such that dispersion of the particles is achieved.

An amount of the powder dispersion to be analysed in each case is taken from the beaker containing the agitated pre-dispersion using a disposable plastic pipette and manually added rapidly to the measurement medium described in the Hydro LV dispersion unit of the Mastersizer 3000. This is repeated until sufficient shadowing of the two light sources (red and blue) of 7% to 15% is achieved. Formation of foam should be absolutely avoided here. Prior to commencement of the measurement, the sample is dispersed with degassing in the measurement medium at 100% ultrasound power (corresponding to 40 W, nominal frequency 40 kHz) and a stirrer speed of 2500 rpm for 60 s. Thereafter, the ultrasound probe is switched off and the analysis of the sample is conducted without delay, with movement of the sample through the measurement cell by means of the stirrer running at 2500 rpm. The measurement of the sample comprises two measurements each for 10 s with the red light source and two measurements each for 10 s with the blue light source. The average of the respective measurements is utilized for evaluation. The following parameters are set in the software: particle type: non-spherical; dry powder mode; refractive index 1.520; absorption index: 0.100; particle density: 1.00 g/cm³; dispersion medium: water (refractive index 1.330). The data evaluation is effected via application of the Fraunhofer approximation (software settings: analysis model: universal, Fraunhofer, volume). The Fraunhofer approximation is elucidated in detail, for example, in Annex A of ISO 13320:2020. The evaluation is effected in an automated manner with the set parameters by the instrument's own above-specified software. The reporting of the D50, D10 and P90 particle sizes obtained is based on the volume distribution.

### Determination of flowability:

Analytical assessment of flowability is accomplished using the "Revolution Powder Analyzer" (Rev 2007, Software: Revolution Version 5.0) from Mercury Scientific Inc., Newtown, USA. The Revolution Powder Analyzer has a rotating cylinder into which the powder to be analysed is introduced. The end faces of the cylinder are transparent, and a digital camera records the behaviour of the powder during rotation. The instrument's own software evaluates these recorded images. The values obtained for the avalanche angle and the absolute break energy are a measure of the flow characteristics of the powder. A higher avalanche angle and a higher absolute break energy indicate poorer flowability. Before the measurement, all powders are dried under reduced pressure at 70°C for 16 hours.

In the measurement in the Revolution Powder Analyzer, the "Flowability" method is chosen with the following parameters: measurement drum diameter 100 mm, filled with 100 cm³ of loosely poured powder; rotation rate 0.6 rpm; imaging rate: 10 fps; prep. time: 60 sec; avalanche threshold: 0.65%; stop test after 150 avalanches; camera settings: shutter speed: 7 ms; gain: 8 db; image analysis: threshold 150; tail correction: on; edge pixels: 30.

### Sifting of powders:

Sifting of powders was conducted with a TSP 100 toner sifter from Hosokawa Alpine AG, Augsburg, Germany. The purge gas used was nitrogen. The temperature of the purge gas was 26°C. For siftings at 30.53 µm, a sifting wheel speed of 2000 rpm and a metering rate of 10 kg/hour were chosen. The fan was operated at 125 m³/hour. For siftings at 10.48 µm, the speed of the sifter wheel was 1750 rpm, and a metering rate of 10 kg/hour was chosen. The fan was operated in this case at 105 m³/hour.

### Assessment in the selective laser sintering method:

As well as the analytical assessment, there is also an assessment by the selective laser sintering method. For this purpose, the powders from the examples are processed in the powder bed of a EOSINT P396 (PSW 3.8) from Electro Optical Systems, Munich, Germany. Tensile specimens of the 1B type, DIN EN ISO 527-1:2019-12, were produced. In order to produce the tensile specimens, the mechanical parameters, a layer thickness of 0.15 mm and the red blade cassette were used. The process temperature used in each case is a temperature 1 K below the temperature at which the powder starts to sinter. The withdrawal chamber temperature set is a temperature 40 K below the process temperature. 9 mm empty layers are built before the exposure of the tensile specimens is commenced. The tensile specimens are positioned in a plane centrally in the build field with an orientation in X direction. On conclusion of the exposure of the tensile specimens, further 9 mm empty layers are built, and then the cooling process is started. After a cooling time of at least 12 hours, the tensile specimens are removed from the powder cake and cleaned by sandblasting. For each powder example, 6 tensile specimens are built.

The process window results from the difference between the upper and lower process temperatures. The lower process temperature is the lowest possible process temperature at which the abovementioned tensile specimens can be built. The upper process temperature is the temperature at which the powder particles of the powder in the build field start to sinter or form sinter necks. This can be identified under a microscope by examinations on powder samples taken from the centre of the build field.

Warpage is assessed using the tensile specimens. Warpage is ascertained by placing the respective tensile specimen on a flat base and using a ruler or slide rule to determine the maximum distance of the top side of the tensile specimen from the base. Higher warpage corresponds to a greater ascertained difference.

### Example 1: Precipitated nylon-12 powder without addition of free-flow aid (not in accordance with the invention)

A precipitated nylon-12 powder is produced by the method described in DE 29 06 647 B1, with the resulting powder having the properties described in DE 197 47 309 A1.

The polymer powder obtained has the following indices:

| | |
|---|---|
| D50 [µm] | 56 |
| D10 [µm] | 38 |
| D90 [µm] | 81 |

| Proportion by volume of particles: | |
|---|---|
| < 10.48 µm | 0.7% |
| ≥ 10.48 µm and < 30.53 µm | 4.2% |

| Flowability: | |
|---|---|
| Avalanche angle [°] | 52 |
| Absolute break energy [kJ/kg] | 301 |

The powder is processed on a EOSINT P396. The powder can be metered only with difficulty both at room temperature and at process temperature, and powder application is poor. The powder has a process window of 8 K.

### Example 2: The precipitated nylon-12 powder from Example 1 with the addition of an inorganic free-flow aid (not in accordance with the invention)

The precipitated nylon-12 powder from Example 1 is mixed with an inorganic free-flow aid (Aerosil^{®} 300, Evonik, Germany), such that the proportion of the free-flow aid is 0.2% by weight based on the weight of the overall powder. The mixture is produced in a M20 S-FU mixing device from MTI, Detmold, Germany, at 1500 rpm for 3 min.

The resulting powder has the following indices:

| Flowability: | |
|---|---|
| Avalanche angle [°] | 34 |
| Absolute break energy [kJ/kg] | 265 |

The powder is processed on a EOSINT P396. The powder has good meterability both at room temperature and at process temperature, and powder application is good. The powder has only a small process window of 1 K. The components produced show higher warpage than the components from Example 1.

### Example 3: Precipitated nylon-6,13 powder without addition of free-flow aid (not in accordance with the invention)

A precipitated nylon-6,13 powder is produced in accordance with the method described in DE 10 2004 020 453 A1.

The precipitated nylon-6,13 powder has the following indices:

| | |
|---|---|
| D50 [µm] | 55 |
| D10 [µm] | 38 |
| D90 [µm] | 78 |

| Proportion by volume of particles: | |
|---|---|
| < 10.48 µm | 0.9% |
| ≥ 10.48 µm and < 30.53 µm | 5.1% |

| Flowability: | |
|---|---|
| Avalanche angle [°] | 53 |
| Absolute break energy [kJ/kg] | 305 |

The powder is processed on a EOSINT P396. The powder can be metered only with difficulty both at room temperature and at process temperature, and powder application is poor. The powder has a process window of 3 K.

### Example 4: The precipitated nylon 6.13 powder from Example 3 with the addition of an inorganic free-flow aid (not in accordance with the invention)

The precipitated nylon-6,13 powder from Example 3 is mixed with an inorganic free-flow aid (Aerosil^{®} 90, Evonik, Germany), such that the proportion of the free-flow aid is 0.3% by weight based on the weight of the overall powder. The mixture is produced in a M20 S-FU mixing device from MTI, Detmold, Germany, at 1500 rpm for 3 min.

The resulting powder has the following indices:

| Flowability: | |
|---|---|
| Avalanche angle [°] | 33 |
| Absolute break energy [kJ/kg] | 266 |

The powder is processed on a EOSINT P396. The powder has good meterability both at room temperature and at process temperature, and powder application is good. The powder has only one process point; this means that it was possible to produce components, but the powder cake was already quite hard after the end of the process. The components produced show higher warpage than the components from Example 3.

### Example 5: Ground polypropylene powder without addition of free-flow aid (not in accordance with the invention)

Polypropylene granules (CP360H type from Braskem, Rotterdam, the Netherlands) are ground in a pinned-disk mill by means of cold grinding.

The ground polypropylene powder has the following indices:

| | |
|---|---|
| D50 [µm] | 65 |
| D10 [µm] | 26 |
| D90 [µm] | 113 |

| Proportion by volume of particles: | |
|---|---|
| < 10.48 µm | 1.3% |
| ≥ 10.48 µm and < 30.53 µm | 10.2% |

| Flowability: | |
|---|---|
| Avalanche angle [°] | 54 |
| Absolute break energy [kJ/kg] | 318 |

The powder is processed on a EOSINT P396. The powder can be metered only with difficulty both at room temperature and at process temperature, and powder application is poor. The powder has a process window of 2 K.

### Example 6: The ground polypropylene powder from Example 5 with the addition of an inorganic free-flow aid (not in accordance with the invention)

The ground polypropylene powder from Example 5 is mixed with an inorganic free-flow aid (Aerosil^{®} R812, Evonik, Germany), such that the proportion of the free-flow aid is 0.1% by weight based on the weight of the overall powder. The mixture is produced in a M20 S-FU mixing device from MTI, Detmold, Germany, at 1500 rpm for 3 min.

The resulting powder has the following indices:

| Flowability: | |
|---|---|
| Avalanche angle [°] | 36 |
| Absolute break energy [kJ/kg] | 274 |

The powder is processed on a EOSINT P396. The powder can be metered only with difficulty both at room temperature and at process temperature, and powder application is poor. The powder has only one process point; this means that it was possible to produce components, but the powder cake was already quite hard after the end of the process. The components produced show higher warpage than the components from Example 5.

### Example 7: The precipitated nylon-12 powder from Example 1, but with an elevated proportion of particles having a particle size of less than 10.48 µm and a reduced proportion of particles having a particle size of 10.48 µm to less than 30.53 µm (according to the invention)

For this purpose, the powder from Example 1 is sifted in a first step, such that particles having a particle size of less than 30.53 µm are removed. This fines fraction is sifted in a second sifting step such that particles having a particle size of less than 10.48 µm are removed. The fines fraction from the second sifting step is then mixed with the coarse fraction from the first sifting step. The mixture is produced in a M20 S-FU mixing device from MTI, Detmold, Germany, at 1500 rpm for 3 min.

The resulting powder has the following indices:

| | |
|---|---|
| D50 [µm] | 57 |
| D10 [µm] | 40 |
| D90 [µm] | 81 |

| Proportion by volume of particles: | |
|---|---|
| < 10.48 µm | 0.8% |
| ≥ 10.48 µm and < 30.53 µm | 1.1% |

| Flowability: | |
|---|---|
| Avalanche angle [°] | 37 |
| Absolute break energy [kJ/kg] | 263 |

The powder is processed on a EOSINT P396. The powder is meterable both at room temperature and at process temperature, and powder application is good. The powder has a process window of 7 K. The components do not show elevated warpage compared to Example 1.

### Example 8: Mixture of the precipitated nylon-12 powder from Example 1 and a further precipitated nylon-12 powder having an elevated proportion of particles having a particle size of less than 10.48 µm and a reduced proportion of particles having a particle size of 10.48 µm to less than 30.53 µm (according to the invention)

The precipitated nylon-12 powder from Example 1 is sifted here in a first step, such that particles having a particle size of less than 30.53 µm are removed.

A second nylon-12 powder is produced in accordance with the method described in DE 29 06 647 B1. The second precipitated nylon-12 powder has the following indices:

| | |
|---|---|
| D50 [µm] | 47 |
| D10 [µm] | 15 |
| D90 [µm] | 72 |

| Proportion by volume of particles: | |
|---|---|
| < 10.48 µm | 7% |
| ≥ 10.48 µm and < 30.53 µm | 22% |

This second precipitated nylon-12 powder is sifted such that particles having a particle size of less than 10.48 µm are removed. The fine material thus obtained from the second precipitated nylon-12 powder is mixed with the coarse fraction from the first precipitated nylon-12 powder. The mixture is produced in a M20 S-FU mixing device from MTI, Detmold, Germany, at 1500 rpm for 3 min.

The resulting powder has the following indices:

| | |
|---|---|
| D50 [µm] | 54 |
| D10 [µm] | 37 |
| D90 [µm] | 76 |

| Proportion by volume of particles: | |
|---|---|
| < 10.48 µm | 4.3% |
| ≥ 10.48 µm and < 30.53 µm | 1.6% |

| Flowability: | |
|---|---|
| Avalanche angle [°] | 35 |
| Absolute break energy [kJ/kg] | 265 |

The powder is processed on a EOSINT P396. The powder is meterable both at room temperature and at process temperature, and powder application is good. The powder has a process window of 8 K. The components do not show elevated warpage compared to Example 1.

### Example 9: The precipitated nylon-6,13 powder from Example 3, but with an elevated proportion of particles having a particle size of less than 10.48 µm and a reduced proportion of particles having a particle size of 10.48 µm to less than 30.53 µm (according to the invention)

For this purpose, the precipitated nylon-6,13 powder from Example 3 is sifted in a first step, such that particles having a particle size of less than 30.53 µm are removed. This fines fraction is sifted in a second sifting step such that particles having a particle size of less than 10.48 µm are removed. The fines fraction from the second sifting step is then mixed with the coarse fraction from the first sifting step. The mixture is produced in a M20 S-FU mixing device from MTI, Detmold, Germany, at 1500 rpm for 3 min.

The resulting powder has the following indices:

| | |
|---|---|
| D50 [µm] | 56 |
| D10 [µm] | 42 |
| D90 [µm] | 78 |

| Proportion by volume of particles: | |
|---|---|
| < 10.48 µm | 2.1% |
| ≥ 10.48 µm and < 30.53 µm | 0.9% |

| Flowability: | |
|---|---|
| Avalanche angle [°] | 36 |
| Absolute break energy [kJ/kg] | 269 |

The powder is processed on a EOSINT P396. The powder is meterable both at room temperature and at process temperature, and powder application is good. The powder has a process window of 5 K. The components do not show elevated warpage compared to Example 1.

### Example 10: Mixture of the precipitated nylon-12 powder from Example 1 and the precipitated nylon-6,13 powder from Example 3 having an elevated proportion of particles having a particle size of less than 10.48 µm and a reduced proportion of particles having a particle size of 10.48 µm to less than 30.53 µm (according to the invention)

For this purpose, the precipitated nylon-12 powder from Example 1 is sifted such that particles having a particle size of less than 30.53 µm are removed. In addition, the precipitated nylon-6,13 powder from Example 3 is sifted such that particles having a particle size of less than 10.48 µm are removed. The fine material from the precipitated nylon-6,13 powder is then mixed with the coarse fraction from the precipitated nylon-12 powder. The mixture is produced in a M20 S-FU mixing device from MTI, Detmold, Germany, at 1500 rpm for 3 min.

The resulting powder has the following indices:

| | |
|---|---|
| D50 [µm] | 56 |
| D10 [µm] | 38 |
| D90 [µm] | 81 |

| Proportion by volume of particles: | |
|---|---|
| < 10.48 µm | 4.3% |
| ≥ 10.48 µm and < 30.53 µm | 1.2% |

| Flowability: | |
|---|---|
| Avalanche angle [°] | 34 |
| Absolute break energy [kJ/kg] | 271 |

The powder is processed on a EOSINT P396. The powder is meterable both at room temperature and at process temperature, and powder application is good. The powder has a process window of 8 K. The components do not show elevated warpage compared to Example 1.

### Example 11: The ground polypropylene powder from Example 5, but with an elevated proportion of particles having a particle size of less than 10.48 µm and a reduced proportion of particles having a particle size of 10.48 µm to less than 30.53 µm (according to the invention)

For this purpose, the ground polypropylene powder from Example 5 is sifted in a first step, such that particles having a particle size of less than 30.53 µm are removed. This fines fraction is sifted in a second sifting step such that particles having a particle size of less than 10.48 µm are removed. The fines fraction from the second sifting step is then mixed with the coarse fraction from the first sifting step. The mixture is produced in a M20 S-FU mixing device from MTI, Detmold, Germany, at 1500 rpm for 3 min.

The resulting powder has the following indices:

| | |
|---|---|
| D50 [µm] | 65 |
| D10 [µm] | 44 |
| D90 [µm] | 113 |

| Proportion by volume of particles: | |
|---|---|
| < 10.48 µm | 1.7% |
| ≥ 10.48 µm and < 30.53 µm | 0.4% |

| Flowability: | |
|---|---|
| Avalanche angle [°] | 37 |
| Absolute break energy [kJ/kg] | 273 |

The powder is processed on a EOSINT P396. The powder is meterable both at room temperature and at process temperature, and powder application is good. The powder has a process window of 5 K. The components do not show elevated warpage compared to Example 1.

### Example 12: Mixture of the ground polypropylene powder from Example 5 and a further ground polypropylene powder having an elevated proportion of particles having a particle size of less than 10.48 µm and a reduced proportion of particles having a particle size of 10.48 µm to less than 30.53 µm (according to the invention)

For this purpose, the ground polypropylene powder from Example 5 is sifted in a first step, such that particles having a particle size of less than 30.53 µm are removed.

In order to produce a second ground polypropylene powder, polypropylene granules (CP360H type from Braskem, Rotterdam, the Netherlands) are ground in a pinned-disk mill by means of cold grinding. The second ground polypropylene powder has the following indices:

| | |
|---|---|
| D50 [µm] | 44 |
| D10 [µm] | 21 |
| D90 [µm] | 64 |

| Proportion by volume of particles: | |
|---|---|
| < 10.48 µm | 6.1% |
| ≥ 10.48 µm and < 30.53 µm | 12.7% |

The second ground polypropylene powder is sifted such that particles having a particle size of less than 10.48 µm are removed. The fine material from the second ground polypropylene powder is mixed with the course fraction from the ground polypropylene powder from Example 5. The mixture is produced in a M20 S-FU mixing device from MTI, Detmold, Germany, at 1500 rpm for 3 min.

The resulting powder has the following indices:

| | |
|---|---|
| D50 [µm] | 65 |
| D10 [µm] | 44 |
| D90 [µm] | 113 |

| Proportion by volume of particles: | |
|---|---|
| < 10.48 µm | 3.8% |
| ≥ 10.48 µm and < 30.53 µm | 0.8% |

| Flowability: | |
|---|---|
| Avalanche angle [°] | 35 |
| Absolute break energy [kJ/kg] | 270 |

The powder is processed on a EOSINT P396. The powder is meterable both at room temperature and at process temperature, and powder application is good. The powder has a process window of 5 K. The components do not show elevated warpage compared to Example 1.

Non-inventive Examples 1, 3 and 5 without free-flow aid have poor flowability. Addition of an inorganic free-flow aid can distinctly improve flowability, but the process window is reduced and the parts obtained show a higher tendency to warpage (non-inventive Examples 2, 4 and 6). Inventive Examples 7-12, by contrast, show distinctly improved flowability of the powders with the same process window. The components thus obtained additionally also do not show any elevated tendency to warpage.

## Claims

1. Powder, especially for use in a powder bed fusion method, comprising a polymer powder, where the polymer powder has a proportion by volume of 0.5% to 15% of polymeric particles having a particle size of less than 10.48 µm, a proportion by volume of not more than 4.0% of polymeric particles having a particle size in the range from not less than 10.48 µm to less than 30.53 µm, and polymeric particles having a particle size of not less than 30.53 µm in a corresponding proportion by volume of the polymer powder, so as to result in a total volume of the polymer powder of 100%, where the proportions by volume and the polymeric particle sizes are determined by means of the laser diffraction-based method described in the description.

2. Powder according to Claim 1, **characterized in that** the powder is essentially free of inorganic free-flow aid or the powder comprises at least one inorganic free-flow aid, where the proportion of the at least one inorganic free-flow aid based on the total weight of the powder is preferably less than 1% by weight, further preferably less than 0.1% by weight, more preferably less than 0.05% by weight, and especially less than 0.01% by weight.

3. Powder according to any of the preceding claims, **characterized in that** the proportion of the polymer powder based on the total weight of the powder is at least 30% by weight, at least 50% by weight, preferably at least 70% by weight, further preferably at least 90% by weight or even further preferably at least 95% by weight.

4. Powder according to any of the preceding claims, **characterized in that** the polymer powder
- has a proportion by volume of at least 1.0%, preferably at least 1.5%, more preferably at least 2.0%, of polymeric particles having a particle size of less than 10.48 µm; and/or
- has a proportion by volume of not more than 10%, preferably not more than 10%, further preferably not more than 8.0%, more preferably not more than 6.0%, of polymeric particles having a particle size of less than 10.48 µm; and/or
- the polymer powder has a proportion by volume of not more than 3.0%, preferably not more than 2.0%, more preferably not more than 1.6%, of polymeric particles having a particle size in the range from not less than 10.48 µm to less than 30.53 µm.

5. Powder according to any of the preceding claims, **characterized in that** the polymeric particles of the polymer powder having a particle size of less than 10.48 µm, the polymeric particles of the polymer powder having a particle size in the range from not less than 10.48 µm to less than 30.53 µm and/or polymeric particles of the polymer powder having a particle size of not less than 30.53 µm are produced by grinding, precipitation, polymerization, cutting of fibres or compounding of a polymer melt in a material which is not homogeneously miscible, preference being given to grinding and precipitation.

6. Powder according to any of the preceding claims, **characterized in that** the polymer powder comprises polymeric particles formed from a material comprising at least one thermoplastic polymer, where the at least one thermoplastic polymer is preferably selected from the group consisting of polyolefins, polyethylene, polypropylene, polyvinylchloride, polystyrene, polycarbonates, polyoxymethylene, polyimides, polysulfones, poly(N-methylmethacrylimides), polycarbonate (PC)-acrylonitrile-butadiene-styrene (ABS), ionomers, polymethylmethacrylate, polyvinylidenefluorides, polyetherketones, polyaryletherketones, polyamides and copolymers, mixtures and combinations thereof, where the at least one thermoplastic polymer more preferably comprises a homopolyamide, a copolyamide or a mixture of homo- and copolyamide.

7. Powder according to any of the preceding claims, **characterized in that** the polymeric particles of the polymer powder having a particle size of less than 10.48 µm, the polymeric particles of the polymer powder having a particle size in the range from not less than 10.48 µm to less than 30.53 µm and the polymeric particles of the polymer powder having a particle size of not less than 30.53 µm are formed from the same material, where the material is preferably selected from the materials mentioned in Claim 6.

8. Process for producing a powder according to any of Claims 1 to 7, wherein the polymer powder is provided by at least combining at least one first powder comprising polymeric particles and a second powder comprising polymeric particles.

9. Process according to Claim 8, **characterized in that** the first powder includes essentially only polymeric particles having a particle size of not less than 30.53 µm and/or the second powder includes essentially only polymeric particles having a particle size less than 10.48 µm and/or the polymeric particles of the first powder and the particles of the second powder are formed essentially from the same material.

10. Process according to either of Claims 8 and 9, **characterized in that** the first powder and/or the second powder is obtained by one or more sifting steps.

11. Process according to any of Claims 8 to 10, **characterized in that**
- the first powder comprises the coarse material which is obtained by sifting a first primary powder at 30.53 µm, where the first primary powder preferably has a D50 particle size of 40 µm to 120 µm, further preferably of 40 µm to 90 µm; and/or
- the second powder comprises the fine material which is obtained by sifting a second primary powder at 10.48 µm, where the second primary powder preferably has a D50 particle size of 1 µm to 20 µm.

12. Process according to any of Claims 8 to 10, **characterized in that** the first powder and the second powder are obtained by
- a first sifting of a primary powder at 30.53 µm, where the coarse material obtained from the first sifting forms the first powder; and
- a second sifting of the fine material from the first sifting at 10.48 µm, where the fine material obtained from the second sifting forms the second powder;
where the primary powder preferably has a D50 particle size of 40 µm to 120 µm, preferably 40 µm to 90 µm.

13. Powder bed comprising a powder according to any of Claims 1 to 7, wherein the powder has preferably been produced by a process according to any of Claims 8 to 12, especially for use in a fusion zone of a powder bed fusion method.

14. Shaped body produced by means of a powder bed fusion method using a powder bed according to Claim 13.

15. Use of a powder according to any of Claims 1 to 7 or of a powder bed according to Claim 13 in a powder bed fusion method, wherein the powder has preferably been produced by the method according to any of Claims 8 to 12.

## Patentansprüche

1. Pulver, insbesondere zur Verwendung in einem Powder-Bed-Fusion-Verfahren, umfassend ein Polymerpulver, wobei das Polymerpulver einen Volumenanteil von 0,5% bis 15% an polymerhaltigen Partikeln mit einer Partikelgröße kleiner als 10,48 µm, einen Volumenanteil von nicht mehr als 4,0% an polymerhaltigen Partikeln mit einer Partikelgröße im Bereich von größer als oder gleich 10,48 µm bis kleiner als 30,53 µm aufweist und polymerhaltigen Partikeln mit einer Partikelgröße größer als oder gleich 30,53 µm in einem entsprechenden Volumenanteil des Polymerpulvers, sodass sich ein Gesamtvolumen des Polymerpulvers von 100% ergibt, wobei die Volumenanteile und die Größen der polymerhaltigen Partikel mittels dem in der Beschreibung dargestellten Verfahren basierend auf Laserbeugung bestimmt werden.

2. Pulver gemäß Anspruch 1, **dadurch gekennzeichnet, dass** das Pulver im Wesentlichen frei von anorganischer Rieselhilfe ist oder das Pulver mindestens eine anorganische Rieselhilfe umfasst, wobei der Anteil der mindestens einen anorganischen Rieselhilfe, bezogen auf das Gesamtgewicht des Pulvers, bevorzugt weniger als 1 Gewichts-%, weiter bevorzugt weniger als 0,1 Gewichts-%, besonders bevorzugt weniger als 0,05 Gewichts-% und insbesondere weniger als 0,01 Gewichts-% beträgt.

3. Pulver gemäß einem der vorhergehenden Ansprüche, **dadurch gekennzeichnet, dass** der Anteil des Polymerpulvers, bezogen auf das Gesamtgewicht des Pulvers, mindestens 30 Gewichts-%, mindestens 50 Gewichts-%, bevorzugt mindestens 70 Gewichts-%, weiter bevorzugt mindestens 90 Gewichts-% oder noch weiter bevorzugt mindestens 95 Gewichts-% beträgt.

4. Pulver gemäß einem der vorhergehenden Ansprüche, **dadurch gekennzeichnet, dass** das Polymerpulver
- einen Volumenanteil von mindestens 1,0%, bevorzugt mindestens 1,5%, weiter bevorzugt mindestens 2,0%, an polymerhaltigen Partikeln mit einer Partikelgröße kleiner als 10,48 µm aufweist; und/oder
- einen Volumenanteil von maximal 10%, bevorzugt maximal 10%, weiter bevorzugt maximal 8,0%, weiter bevorzugt maximal 6,0% an polymerhaltigen Partikeln mit einer Partikelgröße kleiner als 10,48 µm aufweist; und/oder
- das Polymerpulver einen Volumenanteil von maximal 3,0%, bevorzugt maximal 2,0%, weiter bevorzugt maximal 1,6%, an polymerhaltigen Partikeln mit einer Partikelgröße im Bereich von größer als oder gleich 10,48 µm bis kleiner als 30,53 µm aufweist.

5. Pulver gemäß einem der vorhergehenden Ansprüche, **dadurch gekennzeichnet, dass** die polymerhaltigen Partikel des Polymerpulvers mit einer Partikelgröße kleiner als 10,48 µm, die polymerhaltigen Partikel des Polymerpulvers mit einer Partikelgröße im Bereich von größer als oder gleich 10,48 µm bis kleiner als 30,53 µm und/oder polymerhaltigen Partikel des Polymerpulvers mit einer Partikelgröße größer als oder gleich 30,53 µm durch Vermahlen, Fällung, Polymerisation, Schneiden von Fasern oder Compoundieren einer Polymerschmelze in einem nicht homogen mischbaren Stoff hergestellt werden, wobei Vermahlen und Fällung bevorzugt sind.

6. Pulver gemäß einem der vorhergehenden Ansprüche, **dadurch gekennzeichnet, dass** das Polymerpulver polymerhaltige Partikel umfasst, die aus einem Material gebildet sind, das mindestens ein thermoplastisches Polymer umfasst, wobei das mindestens eine thermoplastische Polymer bevorzugt ausgewählt ist aus der Gruppe bestehend aus Polyolefinen, Polyethylen, Polypropylen, Polyvinylchlorid, Polystyrol, Polycarbonaten, Polyoxymethylen, Polyimiden, Polysulfonen, Poly-(N-methylmethacrylimiden), Polycarbonat (PC)-Acrylnitril-Butadien-Styrol (ABS), Ionomeren, Polymethylmethacrylat, Polyvinylidenfluoriden, Polyetherketonen, Polyaryletherketonen, Polyamiden sowie Copolymeren, Mischungen und Kombinationen davon, wobei das mindestens eine thermoplastische Polymer weiter bevorzugt ein Homopolyamid, ein Copolyamid oder eine Mischung aus Homo- und Copolyamid umfasst.

7. Pulver gemäß einem der vorhergehenden Ansprüche, **dadurch gekennzeichnet, dass** die polymerhaltigen Partikel des Polymerpulvers mit einer Partikelgröße kleiner als 10,48 µm, die polymerhaltigen Partikel des Polymerpulvers mit einer Partikelgröße im Bereich von größer als oder gleich 10,48 µm bis kleiner als 30,53 µm und die polymerhaltigen Partikel des Polymerpulvers mit einer Partikelgröße größer als oder gleich 30,53 µm aus demselben Material gebildet sind, wobei das Material bevorzugt aus den in Anspruch 6 genannten Materialien ausgewählt ist.

8. Verfahren zur Herstellung eines Pulvers gemäß einem der Ansprüche 1 bis 7, wobei das Polymerpulver durch zumindest ein Kombinieren von mindestens einem ersten Pulver umfassend polymerhaltige Partikel und einem zweiten Pulver umfassend polymerhaltige Partikel bereitgestellt wird.

9. Verfahren gemäß Anspruch 8, **dadurch gekennzeichnet, dass** das erste Pulver im Wesentlichen nur polymerhaltige Partikel mit einer Partikelgröße größer als oder gleich 30,53 µm aufweist und/oder das zweite Pulver im Wesentlichen nur polymerhaltige Partikel mit einer Partikelgröße kleiner als 10,48 µm aufweist und/oder die polymerhaltigen Partikel des ersten Pulvers und die Partikel des zweiten Pulvers im Wesentlichen aus demselben Material gebildet sind.

10. Verfahren gemäß einem der Ansprüche 8 und 9, **dadurch gekennzeichnet, dass** das erste Pulver und/oder das zweite Pulver durch einen oder mehrere Sichtschritte erhalten werden.

11. Verfahren gemäß einem der Ansprüche 8 bis 10, **dadurch gekennzeichnet, dass**
- das erste Pulver das Grobgut umfasst, das durch Sichten eines ersten Primärpulvers bei 30,53 µm erhalten wird, wobei das erste Primärpulver bevorzugt eine D50-Partikelgröße von 40 µm bis 120 µm, weiter bevorzugt von 40 µm bis 90 µm, aufweist; und/oder
- das zweite Pulver das Feingut umfasst, das durch Sichten eines zweiten Primärpulvers bei 10,48 µm erhalten wird, wobei das zweite Primärpulver bevorzugt eine D50-Partikelgröße von 1 µm bis 20 µm aufweist.

12. Verfahren gemäß einem der Ansprüche 8 bis 10, **dadurch gekennzeichnet, dass** das erste Pulver und das zweite Pulver erhalten werden durch
- ein erstes Sichten eines Primärpulvers bei 30,53 µm, wobei das erhaltene Grobgut des ersten Sichtens das erste Pulver bildet; und
- ein zweites Sichten des Feinguts des ersten Sichtens bei 10,48 µm, wobei das erhaltene Feingut des zweiten Sichtens das zweite Pulver bildet;
wobei das Primärpulver bevorzugt eine D50-Partikelgröße von 40 µm bis 120 µm, bevorzugt 40 µm bis 90 µm, aufweist.

13. Pulverbett umfassend ein Pulver gemäß einem der Ansprüche 1 bis 7, wobei das Pulver vorzugsweise nach einem Verfahren gemäß einem der Ansprüche 8 bis 12 hergestellt wurde, insbesondere zur Verwendung in einer Fusionszone eines Powder-Bed-Fusion-Verfahrens.

14. Formkörper hergestellt mittels eines Powder-Bed-Fusion-Verfahrens unter Verwendung eines Pulverbetts gemäß Anspruch 13.

15. Verwendung eines Pulvers gemäß einem der Ansprüche 1 bis 7 oder eines Pulverbetts gemäß Anspruch 13 in einem Powder-Bed-Fusion-Verfahren, wobei das Pulver bevorzugt nach dem Verfahren gemäß irgendeinem der Ansprüche 8 bis 12 hergestellt wurde.

## Revendications

1. Poudre, particulièrement destinée à être utilisée dans un procédé de fusion sur lit de poudre, comprenant une poudre de polymère, dans laquelle la poudre de polymère a une proportion en volume de 0,5 % à 15 % de particules polymériques ayant une taille de particule inférieure à 10,48 um, une proportion en volume d'au plus 4,0 % de particules polymériques ayant une taille de particule dans la plage de pas moins de 10,48 µm à moins de 30,53 um, et des particules polymériques ayant une taille de particule d'au moins 30,53 um dans une proportion correspondante en volume de la poudre de polymère, de sorte à obtenir un volume total de la poudre de polymère de 100 %, les proportions en volume et les tailles de particules polymériques étant déterminées au moyen du procédé basé sur la diffraction laser décrit dans la description.

2. Poudre selon la revendication 1, **caractérisée en ce que** la poudre est essentiellement exempte d'auxiliaire d'écoulement inorganique ou la poudre comprend au moins un auxiliaire d'écoulement inorganique, la proportion de l'au moins un auxiliaire d'écoulement inorganique par rapport au poids total de la poudre étant de préférence inférieure à 1 % en poids, en outre préférablement inférieure à 0,1 % en poids, plus préférablement inférieure à 0,05 % en poids, et notamment inférieure à 0,01 % en poids.

3. Poudre selon l'une quelconque des revendications précédentes, **caractérisée en ce que** la proportion de la poudre de polymère par rapport au poids total de la poudre est d'au moins 30 % en poids, d'au moins 50 % en poids, de préférence d'au moins 70 % en poids, en outre préférablement d'au moins 90 % en poids ou même en outre préférablement d'au moins 95 % en poids.

4. Poudre selon l'une quelconque des revendications précédentes, **caractérisée en ce que** la poudre de polymère
- présente une proportion en volume d'au moins 1,0 %, de préférence d'au moins 1,5 %, plus préférablement d'au moins 2,0 %, de particules polymériques ayant une taille de particule inférieure à 10,48 um ; et/ou
- présente une proportion en volume d'au plus 10 %, de préférence d'au plus 10 %, en outre préférablement d'au plus 8,0 %, plus préférablement d'au plus 6,0 %, de particules polymériques ayant une taille de particule inférieure à 10,48 um ; et/ou
- la poudre de polymère présente une proportion en volume d'au plus 3,0 %, de préférence d'au plus 2,0 %, plus préférablement d'au plus 1,6 %, de particules polymériques ayant une taille de particule dans la plage d'au moins 10,48 um et inférieure à 30,53 µm.

5. Poudre selon l'une quelconque des revendications précédentes, **caractérisée en ce que** les particules polymériques de la poudre de polymère ayant une taille de particule inférieure à 10,48 um, les particules polymériques de la poudre de polymère ayant une taille de particule dans la plage d'au moins 10,48 um à moins de 30,53 µm et/ou les particules polymériques de la poudre de polymère ayant une taille de particule d'au moins 30,53 um sont produites par broyage, précipitation, polymérisation, coupe de fibres ou compoundage d'un polymère fondu en un matériau qui n'est pas miscible de manière homogène, la préférence étant donnée au broyage et à la précipitation.

6. Poudre selon l'une quelconque des revendications précédentes, **caractérisée en ce que** la poudre de polymère comprend des particules polymériques formées à partir d'un matériau comprenant au moins un polymère thermoplastique, ledit au moins un polymère thermoplastique étant de préférence choisi dans le groupe constitué par les polyoléfines, le polyéthylène, le polypropylène, le poly(chlorure de vinyle), le polystyrène, des polycarbonates, le polyoxyméthylène, des polyimides, des polysulfones, des poly(N-méthylméthacrylimides), le polycarbonate (PC), un acrylonitrile-butadiène-styrène (ABS), les ionomères, le poly(méthacrylate de méthyle), les poly(fluorures de vinylidène), les polyéthercétones, les polyaryléthercétones, les polyamides et des copolymères, des mélanges et des combinaisons de ceux-ci, l'au moins un polymère thermoplastique comprenant de préférence un homopolyamide, un copolyamide ou un mélange d'homopolyamide et de copolyamide.

7. Poudre selon l'une quelconque des revendications précédentes, **caractérisée en ce que** les particules polymériques de la poudre de polymère ayant une taille de particule inférieure à 10,48 um, les particules polymériques de la poudre de polymère ayant une taille de particule dans la plage d'au moins 10,48 um à moins de 30,53 µm et les particules polymériques de la poudre de polymère ayant une taille de particule d'au moins 30,53 um sont formées à partir du même matériau, où le matériau est de préférence choisi parmi les matériaux mentionnés dans la revendication 6.

8. Procédé de production d'une poudre selon l'une quelconque des revendications 1 à 7, dans lequel la poudre de polymère est fournie en au moins combinant au moins une première poudre comprenant des particules polymériques et une seconde poudre comprenant des particules polymériques.

9. Procédé selon la revendication 8, **caractérisé en ce que** la première poudre comprend essentiellement uniquement des particules polymériques ayant une taille de particule non inférieure à 30,53 um et/ou la seconde poudre comprend essentiellement uniquement des particules polymériques ayant une taille de particule inférieure à 10,48 um et/ou les particules polymériques de la première poudre et les particules de la seconde poudre sont formées essentiellement à partir du même matériau.

10. Procédé selon l'une ou l'autre des revendications 8 ou 9, **caractérisé en ce que** la première poudre et/ou la seconde poudre est obtenue par une ou plusieurs étapes de tamisage.

11. Procédé selon l'une quelconque des revendications 8 à 10, **caractérisé en ce que**
- la première poudre comprend le matériau grossier obtenu par tamisage d'une première poudre primaire à 30,53 um, la première poudre primaire ayant de préférence une taille de particule D50 de 40 um à 120 µm, en outre préférablement de 40 um à 90 um ; et/ou
- la seconde poudre comprend le matériau fin obtenu par tamisage d'une seconde poudre primaire à 10,48 um, la seconde poudre primaire ayant de préférence une taille de particule D50 de 1 um à 20 µm.

12. Procédé selon l'une quelconque des revendications 8 à 10, **caractérisé en ce que** la première poudre et la seconde poudre sont obtenues par
- un premier tamisage d'une poudre primaire à 30,53 um, le matériau grossier obtenu par le premier tamisage formant la première poudre ; et
- un deuxième tamisage du matériau fin du premier tamisage à 10,48 um, le matériau fin obtenu du deuxième tamisage formant la deuxième poudre ;
la poudre primaire ayant de préférence une taille de particule D50 de 40 um à 120 um, de préférence 40 µm à 90 µm.

13. Lit de poudre contenant une poudre selon l'une quelconque des revendications 1 à 7, dans lequel la poudre a été produite de préférence par un procédé selon l'une quelconque des revendications 8 à 12, notamment pour une utilisation dans une zone de fusion d'un procédé de fusion sur lit de poudre.

14. Corps façonné fabriqué au moyen d'un procédé de fusion sur lit de poudre utilisant un lit de poudre selon la revendication 13.

15. Utilisation d'une poudre selon l'une quelconque des revendications 1 à 7 ou d'un lit de poudre selon la revendication 13 dans un procédé de fusion sur lit de poudre, dans laquelle la poudre a de préférence été produite par le procédé selon l'une quelconque des revendications 8 à 12.
